# DEMANDE DE BREVET EUROPEEN

(11) **EP 1 452 834 A1**
(43) Date de publication de la demande: **01.09.2004**
(21) Numéro de dépôt: 04290334.4
(22) Date de dépôt: 10.02.2004
(51) Int. Cl.: G01D 5/245, G01P 3/44, G01D 5/14, G01D 5/16

(54) **Capteur de rotation magnétique**

(30) Priorité: 25.02.2003 FR 0302304
(71) Demandeur: Aktiebolaget SKF, S-415 50 Göteborg (SE)
(72) Inventeur: Niarfeix, Francois, 37390 Cerelles (FR)
(74) Mandataire: Dossmann, Gérard

(57) **Abrégé**

Dispositif de codage 1 de paramètre de rotation d'un élément tournant comprenant un organe codeur multipistes, chaque piste de codage comprenant au moins un élément de codage, au moins une piste de codage 5 comprenant un anneau magnétique multipolaire, et au moins une piste de codage 4 comprenant une succession de parties évidées 6 et pleines 7 ménagées dans une paroi radiale 3b réalisée en matériau ferro-magnétique.

## Description

La présente invention concerne les anneaux ou disques codeurs, appelés également « bagues d'impulsions », disposés sur un organe tournant et comportant au moins deux pistes de codage, chaque piste étant destinée à travailler en coopération avec au moins un capteur correspondant en vue de délivrer un signal permettant de déterminer la valeur du paramètre à mesurer, telle que le déplacement, la vitesse ou l'accélération angulaire de l'organe tournant. Ces signaux peuvent être utilisés pour le pilotage de certains types de moteurs électriques, par exemple pour des moteurs électriques sans balai.

La nécessité d'un anneau codeur comportant plusieurs pistes est due à des applications dans lesquelles le signal recherché est un signal haute résolution accompagné d'un signal index et/ou d'un autre signal basse résolution, les signaux étant exploités séparément ou en combinaison pour les besoins de l'application. Chaque piste comporte des éléments de codage dont la structure dépend du type de capteur avec lequel fonctionne ladite piste.

Des éléments de codage magnétiques, tels qu'un anneau multipolaire, fonctionnent avec des capteurs magnétosensibles tels que sondes à effet Hall ou des magnétorésistances.

Le document US 4 599 561 décrit un codeur multipistes. Toutefois, le regroupement des pistes sur une même surface est pénalisant pour l'encombrement. La proximité de deux pistes contiguës peut poser certains problèmes de détection en raison de la position du signal, par exemple dans le cas de pistes magnétiques. La magnétisation d'une piste peut perturber et modifier la magnétisation de l'autre piste. Les capteurs peuvent être influencés par les deux pistes à la fois si celles-ci sont très proches.

L'utilisation de plusieurs pistes magnétisées peut se révéler coûteuse et peu performante.

L'invention se propose de résoudre ces problèmes.

L'invention propose un anneau codeur multipistes, de faible encombrement, économique et de détection aisée grâce à des pistes de structure différente.

L'invention propose également un dispositif de codage et un palier à roulement ainsi équipé.

Le dispositif de codage de paramètre de rotation d'un élément tournant, selon un aspect de l'invention, comprend un organe codeur multipistes. Chaque piste de codage comprend au moins un élément de codage. Au moins une piste de codage comprend un anneau magnétique multipolaire. Au moins une piste de codage comprend une succession de parties pleines et évidées ménagées dans une paroi radiale réalisée en matériau ferro-magnétique.

Avantageusement, une piste est à haute résolution et une piste est à basse résolution.

Dans un mode de réalisation de l'invention, une piste est disposée sur la périphérie du dispositif. Ladite piste bénéficie du diamètre le plus élevé pour une excellente résolution.

Avantageusement, les pistes sont solidaires d'un même support. Le support peut comprendre ladite paroi radiale. Le dispositif est alors particulièrement compact.

Dans un mode de réalisation de l'invention, une piste est surmoulée sur le support.

Dans un mode de réalisation de l'invention, le support est annulaire. Le support peut présenter une section en S ou en C.

Dans un mode de réalisation de l'invention, lesdites parties creuses forment des fenêtres.

Dans un mode de réalisation de l'invention, une piste comprend un matériau synthétique chargé de particules magnétisées.

L'invention propose également un système de détection comprenant un dispositif de codage, au moins un premier capteur magnétosensible coopérant avec une piste et au moins un deuxième capteur magnétosensible pourvu d'un aimant et coopérant avec une piste. Le dispositif de codage comprend un organe codeur multipistes, chaque piste de codage comprenant au moins un élément de codage, au moins une piste de codage comprenant un anneau magnétique multipolaire, au moins une piste de codage comprenant une succession de parties pleines et creuses ménagées dans une paroi radiale réalisée en matériau magnétique.

Dans un mode de réalisation de l'invention, les premier et deuxième capteurs sont décalés angulairement l'un par rapport à l'autre.

L'invention propose également un palier à roulement comprenant une bague tournante, une bague non tournante, au moins une rangée d'éléments roulants et un dispositif de codage.

L'invention propose également un moteur électrique comprenant un stator, un rotor, et au moins un dispositif de codage.

La présente invention sera mieux comprise à l'étude de la description détaillée d'un mode de réalisation pris à titre d'exemple nullement limitatif et illustré par les dessins annexés, sur lesquels :
- la figure 1 est une vue de face en élévation d'un anneau codeur selon un premier mode de réalisation de l'invention ;
- la figure 2 est une vue en coupe axiale de l'anneau codeur de la figure 1 ;
- la figure 3 est une vue de détail de l'anneau codeur de la figure 2 ;
- la figure 4 est une vue d'une variante de l'anneau codeur de la figure 3 ; et
- la figure 5 est une vue en coupe axiale d'un palier à roulement selon un mode de réalisation de l'invention.

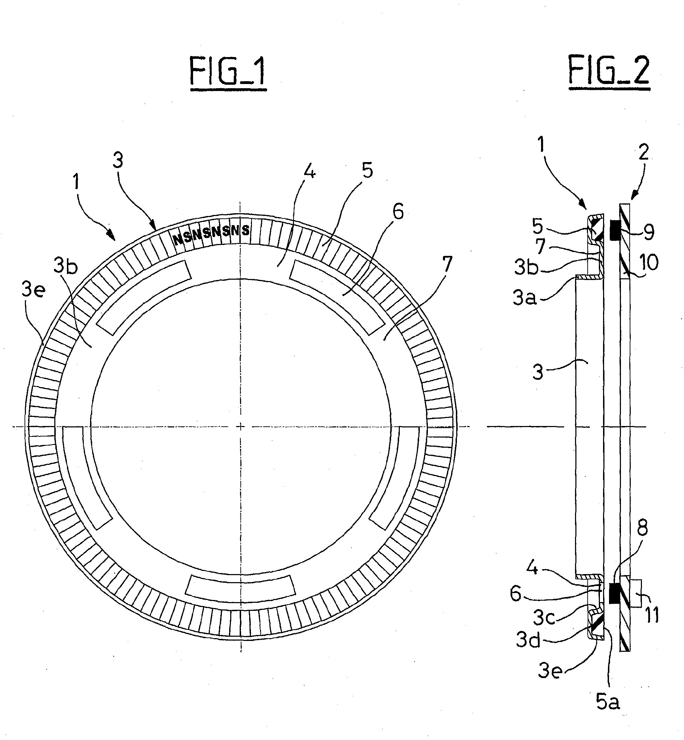

Comme on peut le voir sur les figures 1 et 2, l'anneau codeur 1 est destiné à coopérer avec un ensemble capteur 2 visible sur la figure 2. L'anneau codeur 1 comprend un support annulaire 3 de section en S réalisé en un matériau ferro-magnétique tel qu'un acier doux, présentant une portion axiale 3a de faible diamètre, une première portion radiale 3b s'étendant vers l'extérieur à partir d'une extrémité de la portion axiale 3a, une première portion tronconique 3c entourant la portion axiale 3a et s'étendant légèrement vers l'extérieur à partir de l'extrémité de grand diamètre de la première portion radiale 3b, une deuxième portion radiale 3d s'étendant vers l'extérieur à partir de l'extrémité de grand diamètre de la première portion tronconique 3c, et une deuxième portion tronconique 3e entourant la première portion tronconique 3c et s'étendant légèrement vers l'extérieur à partir de l'extrémité de grand diamètre de la deuxième portion radiale 3d.

L'anneau codeur 1 comprend une première piste de codage 4 formée dans la première portion radiale 3b et une deuxième piste de codage 5 disposée sur la première portion tronconique 3c, la deuxième portion radiale 3d, et la deuxième portion tronconique 3e du support 3.

La piste de codage 4 est formée directement dans la première portion radiale 3b sous la forme d'une pluralité de parties évidées, également appelées « fenêtres » 6 et de parties pleines 7 circonférentiellement régulièrement réparties. Ici, la piste de codage 4 comprend cinq fenêtres 6 et cinq parties pleines 7. Les fenêtres 6 peuvent être fabriquées de façon économique par poinçonnage. La piste de codage 4 occupe une partie seulement de la première portion radiale 3b du support 3 en étant disposée à distance de la première portion tronconique 3c. La première portion radiale 3b assure à la fois la fonction de support des portions 3c, 3d, 3e, et de la piste de codage 5, et la fonction de codage.

La piste de codage 5 est réalisée en matériau de synthèse chargé de particules magnétiques ou magnétisables, par exemple en plastoferrite ou en élastoferrite. La piste de codage 5 est logée dans la rainure annulaire définie par la première portion tronconique 3c, la deuxième portion radiale 3d, et la deuxième portion tronconique 3e du support 3. La deuxième piste de codage 5 comprend 128 éléments de codage circonférentiellement régulièrement répartis présentant successivement des polarités opposées et occupe l'ensemble de ladite rainure. La piste de codage 5 offre une surface annulaire radiale 5a du côté axialement opposé à la deuxième portion radiale 3d, ladite surface radiale 5a affleurant la première portion radiale 3b.

La piste haute résolution disposée sur la périphérie de l'anneau codeur bénéficie du diamètre maximum qui permet, pour nombre donné de paires de pôles nécessaires, d'avoir une longueur maximale desdites paires ce qui facilite la magnétisation ou inversement pour une longueur minimale donnée de paires de pôles, de pouvoir disposer d'un nombre maximal de paires de pôles, ce qui augmente la résolution.

A titre d'exemple, les champs qui peuvent être obtenus sur une piste d'un diamètre de l'ordre de 80 mm comportant 64 paires de pôles varient de +300 à -300 Gauss d'un pôle à l'autre.

La piste de codage 5 peut être magnétisée efficacement sans être gênée par une autre piste magnétique voisine.

L'ensemble capteur 2 comprend deux capteurs 8 et 9, par exemple du type cellule à effet Hall, supportés par un support 10 tel qu'une carte de circuit imprimé. Le capteur 8 est disposé en regard de la piste de codage 4 avec un faible entrefer axial et est supporté directement par le support 10. Le support 10 est annulaire et s'étend radialement substantiellement à partir de la portion cylindrique 3a du support 3 jusque légèrement au-delà de la piste de codage 5.

Le capteur 9 est supporté directement par le support 10 axialement du même côté que le capteur 8 et est disposé en regard de la piste de codage 5 avec un léger entrefer axial.

En d'autres termes, l'anneau codeur 1 comprend une piste extérieure 5 à haute résolution et une piste intérieure 4 à basse résolution. La piste haute résolution de grand diamètre bénéficie de la circonférence maximale en vue d'une précision angulaire élevée. La piste basse résolution est disposée sur une face radiale de l'anneau codeur.

L'ensemble capteur 2 comprend en outre un aimant 11 disposé du côté du support 10 opposé au capteur 8 et sensiblement au même niveau radial et circonférentiel que ledit capteur 8 pour être en face de la piste de codage 4 et pour soumettre le capteur 8 à l'action de son champ magnétique. Le champ magnétique au niveau du capteur 8 varie selon qu'une fenêtre 6 ou une partie pleine 7 de la piste de codage 4 se trouve en face dudit capteur 8.

A titre d'exemple, pour une piste basse résolution de l'ordre de 70 mm de diamètre, on pourra utiliser un aimant permanent fournissant un champ de 3000 Gauss pouvant varier de ± 500 Gauss lorsque les fenêtres alternent avec des parties pleines.

Les capteurs 8 et 9 sont diamétralement opposés. Ainsi, le champ magnétique de l'aimant 11 qui peut être élevé, n'a pas d'effet néfaste sur le capteur 9. L'écartement radial des pistes de codage 4 et 5 et le fait qu'une seule de ces deux pistes comprend des éléments magnétiques actifs, évite une pollution magnétique mutuelle des binômes piste de codage 4 - capteur 8 et piste de codage 5 - capteur 9.

Les champs magnétiques émis par la piste haute résolution ne sont pas affectés par la piste basse résolution qui ne repose pas sur la même technologie et qui est disposée à une distance suffisante de la piste haute résolution.

Les champs magnétiques émis par la piste haute résolution dans la zone de détection par les cellules correspondantes ne sont pas influencés par le champ magnétique des capteurs de la piste basse résolution.

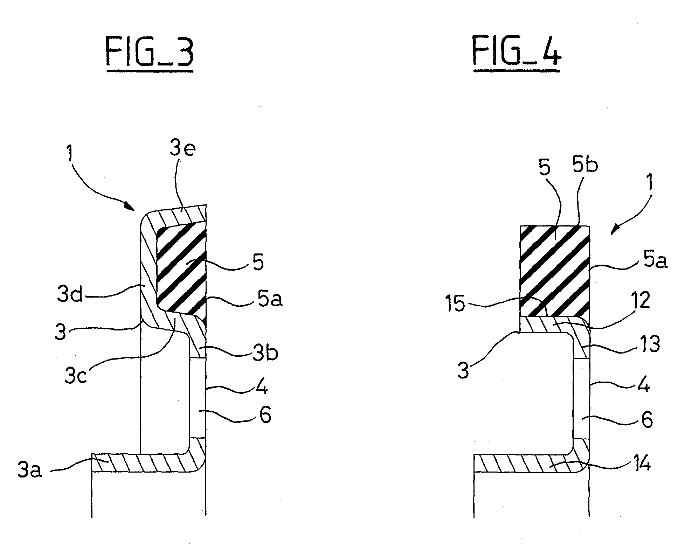

Dans le mode de réalisation illustré sur la figure 4, les éléments sont semblables à ceux des figures 1 à 3, à ceci près que le support 3 de l'anneau codeur 1 présente une section en C avec une portion axiale extérieure 12, une portion radiale 13 et une portion axiale intérieure 14. Le support 3 peut être formé par une rondelle en tôle emboutie. La piste de codage 5 est supportée par la surface extérieure 15 formée par la portion cylindrique extérieure 12. La piste de codage 5 présente une section rectangulaire avec deux faces radiales dont une est prévue pour être disposée à faible distance d'un capteur non représenté. Le capteur peut être disposé avec un entrefer axial comme sur la figure 2, mais aussi avec un entrefer radial, le capteur étant voisin de la surface périphérique 5b de la piste de codage 5.

La piste de codage 4 est formée comme dans le mode de réalisation précédent.

Un tel type d'anneau codeur trouvera une application particulièrement intéressante dans un système de roulement instrumenté utilisé dans un moteur sans contact glissant pour assurer la commutation des ensembles de bobines du stator ainsi que le pilotage du couple dudit moteur.

De tels moteurs sont de plus en plus utilisés dans des moteurs d'actionnement ou d'assistance de colonne de direction, dans des moteurs roues et dans de multiples applications dans lesquelles le moteur doit être piloté en couple.

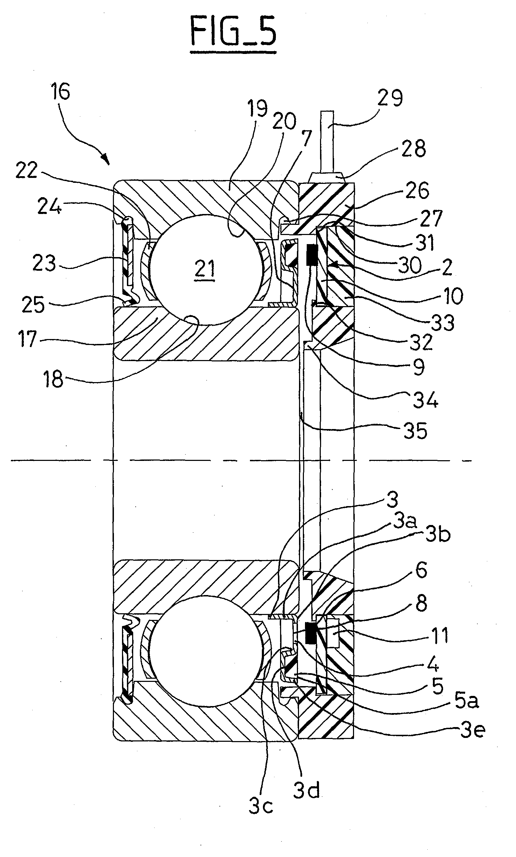

Dans le mode de réalisation illustré sur la figure 5, un palier à roulement 16 est équipé d'un anneau codeur 1 et d'un ensemble capteur 2 tel qu'illustré sur les figures 1 et 2. Le palier à roulement 16 comprend une bague intérieure 17 de type usiné, avec un chemin de roulement 18, une bague extérieure 19 de type usiné, avec un chemin de roulement intérieur 20, une rangée d'éléments roulants 21, ici des billes, maintenus par une cage 22, un joint d'étanchéité 23 monté dans une rainure 24 formée dans la bague extérieure 19 et venant frotter par une lèvre 25 sur une portée extérieure cylindrique de la bague intérieure 17. L'anneau codeur 1 est monté par emmanchement sur une portée extérieure cylindrique de la bague intérieure 17 du côté des éléments roulants opposé au joint d'étanchéité 23. La portion axiale 3a du support 3 sert donc de portée d'emmanchement. La deuxième portion radiale 3d du support 3 est disposée du côté des éléments roulants 21, tandis que la première portion radiale 3b affleure la surface radiale frontale des bagues 17 et 19.

L'ensemble capteur 2 est supporté par un porte capteur 26 réalisé en matériau synthétique et monté par accrochage dans une rainure 27 de la bague extérieure 19 symétrique de la rainure 24 par rapport à un plan passant par le centre des éléments roulants 21. Le porte capteur 26 affleure ou est disposé très légèrement en retrait de la surface extérieure de la bague extérieure 19 tout en étant pourvu d'un terminal filaire 28 pour un fil 29, ledit terminal filaire 28 étant en saillie vers l'extérieur. Le porte capteur 26 est pourvu d'une rainure annulaire 30 dans laquelle est disposé l'ensemble capteur 2, le support 10 étant en butée contre des épaulements 31 et 32 formés dans la rainure 30, de façon que le capteur 8 se trouve en regard de la piste de codage 4 avec un faible entrefer axial et que le capteur 9 se trouve en regard de la piste de codage 5 et avec un faible entrefer radial. Un bouchon annulaire 33 vient fermer le trou 30 et bloquer l'ensemble capteur 2 dans sa position de travail tout en interdisant l'intrusion d'éléments étrangers par ledit trou 30.

En outre, une nervure 34 en saillie axialement vers la bague intérieure 17 forme l'extrémité de petit diamètre du porte capteur 26, qui présente une forme générale annulaire et forme un passage étroit 35 avec ladite bague intérieure 17, prévenant ainsi l'intrusion d'éléments étrangers par cette voie.

Un tel roulement est parfaitement adapté à une utilisation dans un moteur sans contact glissant pour assurer son pilotage.

La piste basse résolution peut coopérer avec trois capteurs de même type (cellule à effet Hall et aimant) décalés angulairement de façon à fournir des signaux, par exemple trois signaux déphasés de 120° électrique pour un moteur sans contact glissant muni d'un stator à trois phases et assurer ainsi la commutation des bobinages du stator correspondant à chaque phase.

La piste haute résolution permet de connaître avec précision la position angulaire du codeur et donc celle du rotor par codage incrémental. La piste haute résolution fonctionne avec deux capteurs magnétosensibles espacés l'un de l'autre dans le sens circonférentiel de façon à générer deux signaux déphasés électriquement de 90°, l'exploitation desdits signaux permettant de connaître le sens de rotation et le déplacement angulaire du codeur et donc du rotor.

Afin qu'il ne se produise pas d'interaction nuisible entre les capteurs coopérant avec la piste basse résolution et ceux coopérant avec la piste haute résolution, on disposera de préférence les deux ensembles de capteurs dans des zones diamétralement opposées.

On dispose ainsi d'un roulement économique, qui peut être de type standard, équipé de moyens de détection de paramètres de rotation particulièrement fiables et compacts. Le palier à roulement peut avantageusement être monté dans un moteur électrique dont on souhaite connaître la position du rotor par rapport au stator, tel qu'un moteur à collecteur électronique.

Dans les exemples illustrés, les pistes de codage comportent une pluralité d'éléments de codage sous forme de pôles ou d'encoches régulièrement répartis dans le sens circonférentiel.

Toutefois, dans d'autres modes de réalisation, une des pistes, de préférence la piste basse résolution, peut comporter un élément de codage unique servant d'index pour un repérage précis de la position angulaire.

On peut bien entendu prévoir différentes combinaisons de pistes de codage avec une piste optique, à transmission ou à réflexion, ou une piste à pôles magnétiques. Dans les différents modes de réalisation de l'invention, les pistes de codage sont disposées à quelque distance l'une de l'autre, de façon à éviter des perturbations, notamment magnétiques, ou une influence d'un capteur par deux pistes à la fois.

## Revendications

1. Dispositif de codage (1) de paramètre de rotation d'un élément tournant comprenant un organe codeur multipistes, chaque piste de codage comprenant au moins un élément de codage, au moins une piste de codage (5) comprenant un anneau magnétique multipolaire, **caractérisé par le fait qu'**au moins une piste de codage (4) comprend une succession de parties évidées (6) et pleines (7) ménagées dans une paroi radiale (3b) réalisée en matériau ferro-magnétique.

2. Dispositif selon la revendication 1, **caractérisé par le fait qu'**une piste est à haute résolution et l'autre piste est à basse résolution.

3. Dispositif selon l'une quelconque des revendications précédentes, **caractérisé par le fait qu'**une piste (5) est disposée sur la périphérie du dispositif.

4. Dispositif selon l'une quelconque des revendications précédentes, **caractérisé par le fait que** les pistes sont solidaires d'un même support (3).

5. Dispositif selon la revendication 4, **caractérisé par le fait que** le support (3) comprend ladite paroi radiale (3b).

6. Dispositif selon la revendication 4 ou 5, **caractérisé par le fait qu'**une piste (5) est surmoulée sur le support.

7. Dispositif selon l'une quelconque des revendications 4 à 6, **caractérisé par le fait que** le support (3) est annulaire.

8. Dispositif selon l'une quelconque des revendications 4 à 7, **caractérisé par le fait que** le support (3) présente une section en S ou en C.

9. Dispositif selon l'une quelconque des revendications précédentes, **caractérisé par le fait que** lesdites parties évidées (6) forment des fenêtres.

10. Dispositif selon l'une quelconque des revendications précédentes, **caractérisé par le fait qu'**une piste (5) comprend un matériau synthétique chargé de particules magnétisées.

11. Système de détection comprenant un dispositif selon l'une quelconque des revendications précédentes, au moins un capteur magnétosensible (9) coopérant avec une piste (5) et au moins un deuxième capteur (8) magnétosensible pourvu d'un aimant (12) et coopérant avec une autre piste (4).

12. Système selon la revendication 11, **caractérisé par le fait que** les premier et deuxième capteurs (8, 9) sont décalés angulairement l'un par rapport à l'autre.

13. Palier à roulement (16) comprenant une bague tournante (17), une bague non tournante (19), au moins une rangée d'éléments roulants (21) et un dispositif selon l'une quelconque des revendications 1 à 10.

14. Moteur électrique comprenant un stator, un rotor, et au moins un dispositif selon l'une quelconque des revendications 1 à 10.
